# EUROPÄISCHE PATENTSCHRIFT

(11) **EP 2 963 398 B1**
(45) Veröffentlichungstag und Bekanntmachung des Hinweises auf die Patenterteilung: **03.08.2016**
(21) Anmeldenummer: 14175008.3
(22) Anmeldetag: 30.06.2014
(51) Int. Cl.: G01J 3/02, G01J 3/10, G01J 3/12, G01J 3/32, G01J 3/42, G01N 21/27

(54) **Prüfverfahren für Spektrometer und Spektrometer mit Prüffunktion**
Test method for spectrometers and spectrometer with a test function
Procédé de contrôle pour spectromètre et spectromètre ayant une fonction de contrôle

(43) Veröffentlichungstag der Anmeldung: 06.01.2016
(73) Patentinhaber: SICK AG, 79183 Waldkirch/Breisgau (DE)
(72) Erfinder: Kaufmann, Jürgen, 79211 Denzlingen (DE); Beyer, Thomas, 79111 Freiburg (DE); Edler, Julian, 79312 Emmendingen (DE)
(74) Vertreter: Manitz, Finsterwald & Partner GbR

(56) Entgegenhaltungen:
- WO-A1-93/03341
- US-A1- 2011 299 076

## Beschreibung

Die Erfindung betrifft ein Prüfverfahren zur Funktionsprüfung eines Spektrometers, ein Verfahren zum Betrieb eines Spektrometers sowie ein Spektrometer zur Ausführung des Verfahrens.

Dabei weist das Spektrometer eine Sendeeinrichtung zur Erzeugung und Aussendung von Strahlung gemäß einem vorgegebenen Wellenlängenverlauf, einen Probenaufnahmebereich, durch den die ausgesandte Strahlung geleitet wird, eine Erfassungseinrichtung zur Erfassung der durch den Probenaufnahmebereich geleiteten Strahlung und zur Erzeugung eines Signalspektrums in Abhängigkeit von der erfassten Strahlung sowie eine Auswerteeinrichtung zur Auswertung des Signalspektrums auf.

Zur Untersuchung einer Gasprobe auf ihre Zusammensetzung und insbesondere auf die Konzentration eines jeweiligen Gases der Probe hin ist es bekannt, diese Informationen mittels Spektroskopie anhand der spezifischen Absorption von Strahlung, wie etwa Licht oder anderer elektromagnetischer Wellen, durch verschiedene Gase bzw. Gasgemische abzuleiten. Typischerweise werden hierzu Laserspektrometer verwendet, bei denen die Strahlung eines Lasers durch die Probe gestrahlt wird, die sich hierzu in dem Probenaufnahmebereich, beispielsweise einem Messraum, befindet oder durch den Probenaufnahmebereich hindurchgeleitet wird. Bei bekannter Messstrecke, d.h. Ausdehnung der Probe in Laserausbreitungsrichtung oder Ausdehnung des Probenaufnahmebereichs, kann gemäß dem Lambert-Beerschen Gesetz der von der Wellenlänge des eingestrahlten Laserlichts abhängige Absorptionskoeffizient bestimmt werden. Aus dem Vergleich eines so gewonnenen Absorptionsspektrums mit für verschiedene Gase bekannten Spektren kann anschließend auf die Konzentration eines Gases bzw. dessen Anteil an der Probe geschlossen werden.

Verschiedene Gase weisen verschiedene typische Wellenlängen auf, bei denen sie besonders stark absorbieren. Die entsprechenden Maxima im Absorptionsspektrum bzw. Minima im Transmissionsspektrum sind idealerweise scharfe Absorptionslinien. Aufgrund der Unschärferelation, des Drucks des Gases sowie des temperaturabhängigen Dopplereffekts sind reale Absorptionslinien jedoch zu einer bestimmten Absorptionslinienform verbreitert. Diese weist in der Regel im Wesentlichen ein Voigt-Profil auf, das sich bei Faltung einer Gauß-Kurve, die typisch für eine temperaturabhängige Dopplerverbreiterung ist, mit einer Lorentz-Kurve, deren Breite typischerweise druckabhängig ist, ergibt.

Für die Messung einer oder mehrerer solcher Absorptionslinien in einem Absorptionsspektrum wird daher ein ganzer Wellenlängenbereich untersucht, indem die von der Sendeeinrichtung, beispielsweise einem Laser, des Spektrometers ausgesandte Strahlung über eine definierte Zeit eine lineare Wellenlängenrampe durchläuft. Dabei kann die lineare Rampe auch Teil einer Sägezahn- oder Dreiecksfunktion oder einer sonstigen periodischen Funktion sein, um denselben Wellenlängenbereich mehrmals zu durchlaufen. Grundsätzlich sind aber auch ganz andere zeitliche Wellenlängenverläufe zur Abtastung des Wellenlängenbereichs denkbar. So kann etwa im Rahmen der Wellenlängen-Modulations-Spektroskopie (WMS) dem grundsätzlich linearen Verlauf der Wellenlänge eine regelmäßige oder harmonische Wellenlängenmodulation hoher Frequenz (insbesondere im Vergleich zur Dauer eines einzelnen Durchlaufens des Wellenlängenbereichs) überlagert sein, um die zu messende Information in einen Frequenzbereich zu verlagern, der ein günstigeres Signal-Rausch-Verhältnis aufweist.

Nachdem die Strahlung von der Sendeeinrichtung gemäß einem Wellenlängenverlauf ausgesandt wurde, durchläuft sie eine durch die jeweilige Probe oder den Probenaufnahmebereich definierte Messstrecke, innerhalb welcher die Strahlung mit der Probe wechselwirken, d.h. insbesondere in ihrer Intensität durch die Probe modifiziert werden, kann. Anschließend wird die gegebenenfalls modifizierte Strahlung mit einer auf den Wellenlängenverlauf abgestimmten Erfassungseinrichtung, beispielsweise einem Strahlungsdetektor, erfasst.

Die so erfasste Information liegt aufgrund des Wellenlängenverlaufs der Strahlung in Form eines Signalspektrums vor, das von der Erfassungseinrichtung in Abhängigkeit von der erfassten Strahlung etwa in elektronischer Form erzeugt wird und zur Auswertung an die Auswerteeinrichtung weitergegeben wird. Hierzu kann das Signalspektrum zunächst auch elektronisch verstärkt werden. Da sich die von der Erfassungseinrichtung erfasste Strahlung im Wesentlichen aus der Absorption der ausgesandten Strahlung durch die Probe ergibt, handelt es sich bei dem gemessenen Signalspektrum in der Regel um ein Absorptionsspektrum. Aus dem Signalspektrum kann dann auf Eigenschaften der gemessenen Probe geschlossen werden. Die Information kann dabei direkt aus dem Absorptionsspektrum oder aus einem Vergleich des Absorptionsspektrums mit einem bekannten Spektrum gewonnen werden.

Die bisher genannten Verfahrensschritte dienen dem allgemeinen Betrieb des Spektrometers bei der Messung einer Probe, insbesondere der Bestimmung der Zusammensetzung oder Konzentration eines Gases. Zwar werden Messsysteme mit einem solchen Spektrometer primär zu diesem Messzweck eingesetzt. Daneben kann es aber auch erforderlich werden, ein Prüfverfahren auf das Spektrometer anzuwenden, bei dem nicht eine Probe, sondern die Funktionstüchtigkeit und Fehlerfreiheit des Spektrometers selbst untersucht werden.

Aus Sicherheitsgründen wird es besonders im industriellen Bereich immer wichtiger, möglichst alle Komponenten eines solchen ein Spektrometer umfassenden Messsystems zu überwachen. Hierzu ist es insbesondere erforderlich, die Fehlerfreiheit des Spektrometers regelmäßig zu überprüfen. Dies kann beispielsweise dadurch erfolgen, dass bei der Durchführung allgemeiner Betriebsschritte des Spektrometers keine tatsächlich zu untersuchende unbekannte Probe gemessen wird, sondern stattdessen die Messung mit dem Spektrometer lediglich nachgestellt und beispielsweise an einer bekannten Probe durchgeführt wird. Anhand einer derartigen Simulation lassen sich dann aus Abweichungen von dem zu erwartenden Ergebnis Fehlerzustände des Spektrometers identifizieren. Anschließend können auf diese Weise gegebenenfalls identifizierte Fehlerzustände, etwa durch Kalibration oder Reparatur des Spektrometers, beseitigt werden, um die Fehlerfreiheit des Spektrometers wiederherzustellen.

Zu diesem Zweck werden Prüfschritte durchgeführt, welche insbesondere in Überlagerung der genannten Betriebsschritte erfolgen können, die also die Betriebsschritte lediglich ergänzen bzw. anpassen, um im Wesentlichen denselben Ablauf wie bei einer tatsächlichen Messung an einer unbekannten Probe beizubehalten. Kern dieser Prüfschritte ist, dass die Strahlung gemäß einer vorgegebenen Prüfreferenz modifiziert wird. Diese Prüfreferenz tritt somit an die Stelle der zu messenden Probe. Des Weiteren umfassen die Prüfschritte, dass in Abhängigkeit von der erfassten modifizierten Strahlung ein Prüfspektrum erzeugt wird, dass das Prüfspektrum mit einem der Prüfreferenz zugeordneten Erwartungsspektrum verglichen wird und dass in Abhängigkeit von Abweichungen des Prüfspektrums von dem Erwartungsspektrum die Fehlerfreiheit oder ein Fehlerzustand des Spektrometers festgestellt wird.

Der wesentliche Unterschied zwischen einer zu messenden Probe und der Prüfreferenz besteht darin, dass bei einer regulären Messung an einer in dem Probenaufnahmebereich aufgenommenen Probe das Modifizieren der Strahlung aufgrund der Absorption der Strahlung durch die Probe zu einem zunächst unbekannten und durch die Messung gerade erst zu ermittelnden Signalspektrum führt, aus dem dann Information über die Probe gewonnen werden kann; wird dagegen die Strahlung gemäß einer Prüfreferenz, d.h. auf bekannte und vorgegebene Weise, modifiziert, ist auch das daraus resultierende Prüfspektrum grundsätzlich schon von vornherein festgelegt und bekannt. Denn es ist zu erwarten, dass das Prüfspektrum dem diesem Prüfspektrum zugeordneten Erwartungsspektrum entspricht, also dem Spektrum, das sich im Falle der Fehlerfreiheit des Spektrometers durch das Modifizieren der ausgesandten Strahlung gemäß der Prüfreferenz ergibt und das in der Regel schon vor der Messung bekannt oder zumindest vorhersagbar ist.

Weicht das Prüfspektrum allerdings von diesem Erwartungsspektrum ab, ist dies ein Indiz dafür, dass die Strahlung auf weitere, in der Regel unerwünschte Weise beeinflusst wurde. Abweichungen zwischen dem Prüfspektrum und dem Erwartungsspektrum weisen daher auf Fehlerzustände des Spektrometers hin, die durch die Auswerteeinrichtung ausgewertet, d.h. analysiert oder zumindest signalisiert, werden können. Aus der Art der Abweichungen kann im Idealfall die Art des Fehlers oder sogar die Fehlerursache ermittelt werden. Als Ergebnis der Überprüfung kann sich aber auch lediglich unspezifisch, etwa nach Überschreiten eines Abweichungsschwellenwerts, die Notwendigkeit einer Kalibrierung oder Reparatur des Spektrometers ergeben.

Zum Modifizieren der Strahlung gemäß einer Prüfreferenz ist es üblich, in den Probenaufnahmebereich Referenzproben einzusetzen. Das sind typischerweise dicht verschlossene Messküvetten, die mit einem Gas gefüllt sind, dessen wellenlängenabhängige Absorption genau bekannt ist, das also geeignet ist, die durch die Küvette im Probenaufnahmebereich gelenkte Strahlung auf bekannte spezifische Weise zu modifizieren. Insbesondere kann eine derartige Referenzmesszelle gerade dasjenige Gas, dessen Konzentration in einer zu messenden Probe bestimmt werden soll, in bekannter Konzentration und bei bekanntem Druck enthalten, so dass das Signalspektrum der Probe auch im Vergleich mit dem Spektrum der Referenzmesszelle ausgewertet werden kann.

Zur Überprüfung des Spektrometers kann auch mit einem Satz mehrerer verschiedener Referenzmesszellen gearbeitet werden, um eine höhere Genauigkeit der Überprüfung, insbesondere auch über einem weiten Wellenlängenbereich, zu erzielen. Je nachdem, was für ein Gas oder Gasgemisch im Anschluss an eine Überprüfung des Spektrometers gemessen werden soll, können auch für dieses Messgas spezifische Referenzmesszellen ausgewählt werden, die besonders geeignet sind, für das jeweilige zu messende Messgas relevante Fehlerzustände des Spektrometers aufzudecken.

Bei bekannten Methoden wird die Prüfreferenz also durch eine oder mehrere Referenzmesszellen dargestellt. Ein Spektrometer, das auf diese Weise kalibriert werden kann, wird beispielsweise in der Anmeldung WO 93/03341 A1 beschrieben, die ein Verfahren nach dem Oberbegriff des Anspruchs 1 sowie ein Spektrometer nach dem Oberbegriff des Anspruchs 13 offenbart.

In diesem Zusammenhang ist es wünschenswert, die Referenzmesszellen möglichst umfassend an das jeweilige zu messende Messgas anzupassen zu können. Insbesondere wenn mit demselben Spektrometer viele verschiedene Messgase gemessen werden sollen, ist dies aber mit hohem Aufwand verbunden, da Referenzmesszellen mit beliebigen gewünschten Absorptionsverläufen nicht zur Verfügung stehen oder erzeugt werden können. Zudem kann auch nicht jedes Messgas zuverlässig zur Erzeugung einer Referenzmesszelle dauerhaft in einer Küvette gelagert werden, da je nach Gas die Dichtigkeit der Gasküvetten problematisch sein kann. Außerdem ist ein mittels einer Referenzmesszelle erzeugtes Prüfspektrum temperatur- und druckabhängig, so dass dieselbe Referenzmesszelle nicht stets zu demselben Prüfspektrum führt. Des Weiteren ist es für die Überprüfung des Spektrometers über einen weiten Konzentrationsbereich erforderlich, messgasspezifische Referenzmesszellen mit mehreren verschiedenen Konzentrationen vorzuhalten.

Aus diesen Gründen ist die Überprüfung eines Spektrometers auf Fehlerfreiheit unter Verwendung von Referenzmesszellen als Prüfreferenzen für das Modifizieren der Strahlung unflexibel und aufwendig, was gerade im Bereich industrieller Laserspektrometer, die aufgrund hoher Sicherheitsanforderungen besonders oft überprüft werden müssen, auch zu einem erhöhten Kosten- und Zeitaufwand führt.

Es ist eine Aufgabe der Erfindung, ein Prüfverfahren zur Funktionsprüfung eines Spektrometers, ein Verfahren zum Betrieb eines Spektrometers sowie ein Spektrometer zur Ausführung eines derartigen Verfahrens bereitzustellen, welche die genannten Nachteile vermeiden und insbesondere ein flexibleres, zeit- und kostengünstigeres Überprüfen des Spektrometers auf Fehlerfreiheit ermöglichen.

Diese Aufgabe wird gelöst durch ein Prüfverfahren mit den Merkmalen des Anspruchs 1 und insbesondere dadurch, dass die Strahlung während des Prüfschritts des Modifizierens mittels einer Modulationseinrichtung des Spektrometers in ihrer Intensität moduliert wird. Weiterhin wird die Aufgabe durch ein Verfahren zum Betrieb eines Spektrometers mit den Merkmalen des Anspruches 12 und ein Spektrometer mit den Merkmalen des Anspruches 13 gelöst. Unteransprüche sind auf bevorzugte Ausgestaltungen gerichtet.

Die Strahlung wird also nicht (oder zumindest nicht ausschließlich) wie bei einer regulären Messung durch eine zu messende Probe aufgrund von Absorption modifiziert, sie wird auch nicht (oder zumindest nicht ausschließlich) wie bei bekannten Verfahren durch eine Referenzmesszelle aufgrund von Absorption modifiziert, sondern sie wird mittels einer als Bestandteil des Spektrometers vorgesehenen Modulationseinrichtung modifiziert, wobei die Art der Modifizierung nicht notwendig auf Absorption beschränkt ist. Der wesentliche Vorteil davon, das Modifizieren der Strahlung mittels einer Modulationseinrichtung durchzuführen, besteht darin, dass die Modulationseinrichtung eine im Vergleich zu der Verwendung von Referenzmesszellen wesentlich höhere Flexibilität und Einfachheit der Anwendung bietet. Da die Modulationseinrichtung Bestandteil des Spektrometers ist, steht sie stets zur Verfügung. Eine erfindungsgemäße Funktionsprüfung des Spektrometers ist somit nicht vom Vorhandensein jeweils benötigter Referenzmesszellen abhängig.

Die Prüfreferenz wird also erfindungsgemäß durch die von der Modulationseinrichtung bewirkte Intensitätsmodulation dargestellt.

Insbesondere handelt es sich bei der Modulationseinrichtung nicht lediglich um ein passives Element, das, wie etwa eine Referenzmesszelle oder ein zu messendes Gas, aufgrund des bloßen Vorhandenseins die hindurchgeleitete Strahlung modifiziert, sondern um ein insofern aktives Element, als es zum Modifizieren der Intensität der Strahlung angesteuert wird und daher insbesondere auch zu einem zeitlich variierenden Modifizieren angesteuert werden kann. Auf diese Weise kann der Verlauf des Modifizierens der Strahlung besonders flexibel gewählt werden.

Dabei ist es auch bevorzugt, wenn die Modulationseinrichtung bezüglich ihrer Fähigkeit, Strahlung zu modifizieren, keine unmittelbare Abhängigkeit von der Wellenlänge der Strahlung aufweist. Mit anderen Worten modifiziert die Modulationseinrichtung, solange sie unverändert angesteuert wird, Strahlung verschiedener Wellenlänge (zumindest im Detektionswellenlängenbereich des Spektrometers) in gleichem Maße. Da die von der Sendeeinrichtung ausgesandte Strahlung jedoch in der Regel einen Wellenlängenbereich kontinuierlich durchläuft, besteht ein regelmäßiger Zusammenhang zwischen der Wellenlänge der Strahlung und der Zeit. Dieser Zusammenhang kann genutzt werden, um mit der grundsätzlich wellenlängenunabhängigen Modulationseinrichtung ein wellenlängenabhängiges Modifizieren der Strahlung zu simulieren. Dazu muss lediglich das Modifizieren der Strahlung - also die Intensitätsmodulation - gemäß einem zeitlichen Verlauf erfolgen, der auf den zeitlichen Verlauf der Wellenlänge der ausgesandten Strahlung abgestimmt ist.

Hinsichtlich des Modifizierens der Strahlung erfüllt die Modulationseinrichtung somit alle Funktionen, für die bislang eine oder mehrere Referenzmesszellen notwendig waren. Die Modulationseinrichtung hat gegenüber einer Referenzmesszelle dabei den Vorteil, Bestandteil des Spektrometers zu sein sowie die Strahlung gemäß einer Vielzahl verschiedener Prüfreferenzen modifizieren zu können, während eine Referenzmesszelle jeweils nur eine einzige Prüfreferenz verwirklichen kann. Hinzu kommt, dass die Modulationseinrichtung nicht auf Prüfreferenzen beschränkt ist, die ohne übertriebenen Aufwand mit bekannten Substanzen in einer Referenzmesszelle erzeugt werden können, sondern prinzipiell beliebige Prüfreferenzen, auch solche die keine Entsprechung in der Messrealität haben, nachbilden kann.

Die Modulationseinrichtung moduliert die Strahlung während eines Durchlaufens des Wellenlängenbereichs gemäß einem zeitlichen Intensitätsverlauf, der als Prüfreferenz vorgegeben ist. Der Ausdruck "Modulation" soll dabei nicht in einer Weise missverstanden werden, dass dieser Intensitätsverlauf notwendigerweise regelmäßig oder periodisch sein muss. Vielmehr kann der Intensitätsverlauf im Wesentlichen beliebig sein, beispielsweise um ein reales Spektrum einer Probe zu simulieren.

Bei der Durchführung des Prüfverfahrens ist es nicht notwendigerweise ausgeschlossen, dass die Strahlung zusätzlich zur Modulation durch die Modulationseinrichtung auch durch eine in den Probenaufnahmebereich aufgenommene Probe und/oder eine Referenzmesszelle modifiziert wird. Insbesondere kann es nützlich sein, die Strahlung durch eine Probe in dem Probenaufnahmebereich zu modifizieren und der so bereits modifizierten Strahlung eine steuerbare zusätzliche Modifizierung durch die Modulationseinrichtung aufzuprägen. So ist es beispielsweise denkbar, aus einer derartig doppelt modifizierten Strahlung ein kombiniertes Signal-/Prüfspektrum abzuleiten, aus dem einerseits Information über die Probe und andererseits Information über die Fehlerfreiheit des Spektrometers zugleich gewonnen werden können.

So ist es möglich, dass das genannte Prüfverfahren einem normalen Spektrometerbetrieb überlagert ist. Hiermit ist gemeint, dass auch bei der Durchführung des Prüfverfahrens die für den allgemeinen Betrieb des Spektrometers, etwa bei einer regulären Messung, erforderlichen Betriebsschritte ausgeführt und durch die Prüfschritte lediglich ergänzt oder angepasst werden. Auf diese Weise wird während des Prüfverfahrens weitgehend eine reguläre Messung nachgestellt mit dem Hauptunterschied, dass das Modifizieren der Strahlung nicht (oder zumindest nicht ausschließlich) durch eine Probe erfolgt, sondern durch die Modulationseinrichtung. Wegen der weitgehenden Übereinstimmung der übrigen Verfahrensschritte ermöglicht das Prüfverfahren die Überprüfung sämtlicher Komponenten des Spektrometers entlang des gesamten Messpfads von einer möglichen Steuerungseinrichtung der Sendeeinrichtung über die Sendeeinrichtung, den Strahlengang, die Empfangseinrichtung und sämtliche nachgeordnete Elektronik bis hin zur Auswerteeinrichtung. Sofern die Auswerteeinrichtung auch Komponenten zum Ausführen einer Auswertesoftware umfasst, kann auch deren Funktionsfähigkeit von dem Prüfverfahren überprüft werden. Somit können Fehler in nahezu allen Bereichen des Spektrometers mittels des Prüfverfahrens zumindest festgestellt, vorzugsweise auch identifiziert und lokalisiert werden.

Insbesondere kann das Prüfverfahren ohne Probe im Probenaufnahmebereich durchgeführt werden. Es ist folglich zur Durchführung des Prüfverfahrens nicht erforderlich, dass eine Probe, sei es eine zu messende Probe oder eine Referenzmesszelle, in dem Probenaufnahmebereich aufgenommen ist. Das Prüfverfahren kann somit vorteilhafterweise unabhängig davon ausgeführt werden, ob gerade eine Probe oder Referenzmesszelle zur Hand ist.

Weiterhin ist es bevorzugt, wenn die Strahlung während des Prüfschritts des Modifizierens außerhalb des Probenaufnahmebereichs moduliert wird. Beispielsweise kann sich die Modulationseinrichtung im Strahlengang der Strahlung vor oder hinter dem Probenaufnahmebereich befinden. Sie kann aber auch außerhalb des Strahlengangs angeordnet sein, wenn sie etwa die Strahlung dadurch modifiziert, dass sie bereits die Erzeugung der Strahlung modifiziert, wie weiter unten noch erläutert wird. Ferner ist es denkbar, dass die Modulationseinrichtung in einem alternativen (Teil-)Strahlengang zum Strahlengang, der durch den Probenaufnahmebereich führt, angeordnet ist, wobei dann zur Durchführung des Prüfverfahrens die Strahlung auf den alternativen Strahlengang umgeleitet wird. Auf diese Weise kann eine in dem Probenaufnahmebereich aufgenommene Probe, die zur Durchführung des Prüfverfahrens ansonsten entfernt werden müsste, in dem Probenaufnahmebereich verbleiben.

Vorzugsweise wird durch den Prüfschritt des Modifizierens der Strahlung mittels der Modulationseinrichtung simuliert, dass von der Sendeeinrichtung ausgesandte Strahlung von einer in den Probenaufnahmebereich aufgenommenen Probe und/oder aufgrund von Druckänderungen, von Konzentrationsänderungen, des Einflusses von Fremdgasen und/oder von optischen Störungen, insbesondere Staub- und/oder Schlierenfluktuationen, modifiziert wird. Das mittels der Modulationseinrichtung bewirkte Modifizieren der Strahlung entspricht also einem Modifizieren der Strahlung, wie es durch eine Probe, d.h. eine zu messende Probe oder eine Referenzmesszelle, unter realen Messbedingungen bewirkt würde. Die Wellenlängenabhängigkeit dieser realen Einflüsse kann dabei aufgrund des zeitlichen Verlaufs des Modifizierens in Verbindung mit dem zeitlichen Verlauf der Wellenlänge der ausgesandten Strahlung nachgebildet werden. Hier zeigt sich die große Flexibilität des Prüfungsverfahrens mittels einer Modulationseinrichtung des Spektrometers, die eine Simulation nahezu beliebiger Modifzierungsverläufe, also unzähliger Prüfreferenzen, ermöglicht.

Gemäß einer Weiterbildung umfasst dass Prüfungsverfahren ferner, dass die vorgegebene Prüfreferenz, gemäß welcher die Strahlung mittels der Modulationseinrichtung moduliert wird, vor dem Modifizieren mittels einer Steuereinrichtung des Spektrometers aus mehreren verschiedenen Prüfreferenzen ausgewählt und/oder frei eingestellt werden kann. Beispielsweise kann eine bestimmte Zahl häufig verwendeter oder allgemein nützlicher Prüfreferenzen in der Steuereinrichtung gespeichert sein; zudem kann die Steuereinrichtung die Möglichkeit bieten, selbst erstellte oder auf andere Weise vorgegebene Prüfreferenzen zu speichern, um sie später für das Modifizieren der Strahlung gemäß einer jeweiligen Prüfreferenz auswählen zu können. Die Steuereinrichtung kann aber Einstellmöglichkeiten vorsehen, die ein weitgehend individuelles Einstellen von Prüfreferenzen ermöglicht. Auf diese Weise kann die Modulationseinrichtung vorteilhafterweise eine grundsätzlich unbeschränkte Vielzahl verschiedener Referenzmesszellen ersetzen.

Bei einer vorteilhaften Weiterbildung umfasst die Modulationseinrichtung einen transmissiven Modulator, gemäß dessen jeweiliger Transmissivität die ausgesandte Strahlung zur Erfassungseinrichtung durchgelassen wird. Ein solcher transmissiver Modulator kann im Strahlengang der Strahlung von der Sendeeinrichtung zur Erfassungseinrichtung angeordnet sein, so dass nur Strahlung, die von dem transmissiven Modulator durchgelassen wird, die Erfassungseinrichtung erreicht. Die Transmissivität und somit der Anteil der durchgelassenen Strahlung sind bei einem solchen Modulator steuerbar und können daher gemäß einem zeitlichen Verlauf entsprechend einer gewünschten Prüfreferenz eingestellt werden.

Alternativ kann die Modulationseinrichtung einen reflektiven Modulator umfassen, gemäß dessen jeweiliger Reflektivität die ausgesandte Strahlung zur Erfassungseinrichtung reflektiert wird. Dabei ist der reflektive Modulator derart in dem Strahlengang der Strahlung von der Sendeeinrichtung zur Erfassungseinrichtung angeordnet, dass nur Strahlung, die von dem reflektiven Modulator reflektiert wird, die Erfassungseinrichtung erreicht. Ähnlich dem transmissiven Modulator sind die Reflektivität und somit der Anteil der reflektierten Strahlung steuerbar und können daher gemäß einem zeitlichen Verlauf entsprechend einer gewünschten Prüfreferenz eingestellt werden.

Beispielsweise umfasst die Modulationseinrichtung zumindest einen optischen Intensitätsmodulator, insbesondere ein LCD-Array, ein DLP-Array, eine Pockels-Zelle und/oder einen akusto-optischen Modulator oder Deflektor. Diese Bauteile können schnell und zuverlässig angesteuert werden, um innerhalb eines jeweiligen Betriebsbereichs verschiedene zeitliche Abläufe des Modifizierens der Strahlung zu ermöglichen.

Weiterhin alternativ umfasst der Prüfschritt des Modifizierens, dass die Modulationseinrichtung die Sendeeinrichtung dazu ansteuert, Strahlung gemäß einem zeitlichen Intensitätsverlauf auszusenden. Das Modifizieren der Strahlung erfolgt hierbei folglich zugleich mit ihrer Erzeugung und Aussendung durch die Sendeeinrichtung. Dabei ist es bevorzugt, wenn die Sendeeinrichtung einen Laser umfasst und der Prüfschritt des Modifizierens umfasst, dass die Modulationseinrichtung einen Betriebsstrom des Lasers moduliert. Somit kann die Modulationseinrichtung auf besonders einfache Weise, etwa lediglich mittels eines steuerbaren elektrischen Widerstands, die Intensität der ausgesandten Strahlung modifizieren.

Es ist ferner grundsätzlich möglich, dass die Modulationseinrichtung mehr als ein die Strahlung modifizierendes Element umfasst, beispielsweise eine Kombination aus einem transmissiven und einem reflektiven Modulator oder eine Kombination eines derartigen Modulators mit einer Steuerung der Intensität der Strahlung beim Aussenden der Strahlung durch die Sendeeinrichtung.

Die Aufgabe wird weiterhin gelöst durch ein Verfahren mit den Merkmalen des Anspruches 12 zum Betrieb eines Spektrometers, das folgende Betriebsschritte umfasst: Erzeugen und Aussenden von Strahlung gemäß einem vorgegebenen Wellenlängenverlauf mittels einer Sendeeinrichtung des Spektrometers, Leiten der ausgesandten Strahlung durch einen Probenaufnahmebereich des Spektrometers, Erfassen der durch den Probenaufnahmebereich gelenkten Strahlung mittels einer Erfassungseinrichtung des Spektrometers, Erzeugen eines Signalspektrums in Abhängigkeit von der erfassten Strahlung und Auswerten des Signalspektrum mittels einer Auswerteeinrichtung des Spektrometers; wobei diesen Betriebsschritten ein wie zuvor beschriebenes Prüfverfahren überlagert wird. Die Vorteile dieses Verfahrens ergeben sich entsprechend zu den genannten Vorteilen des jeweiligen Prüfverfahrens.

Die Aufgabe wird ferner auch gelöst durch ein Spektrometer mit den Merkmalen des Anspruches 13 zur Ausführung eines der wie zuvor beschriebenen Verfahren mit einer Sendeeinrichtung zur Erzeugung und Aussendung von Strahlung gemäß einem vorgegebenen Wellenlängenverlauf, einem Probenaufnahmebereich, durch den die ausgesandte Strahlung geleitet wird, einer Erfassungseinrichtung zur Erfassung der durch den Probenaufnahmebereich geleiteten Strahlung und zur Erzeugung eines Signalspektrums in Abhängigkeit von der erfassten Strahlung und einer Auswerteeinrichtung zur Auswertung des Signalspektrums, wobei das Spektrometer zudem eine Modulationseinrichtung zur Modifizierung der Strahlung gemäß einer Prüfreferenz umfasst, wobei die Erfassungseinrichtung dazu ausgebildet ist, die modifizierte Strahlung zu erfassen und in Abhängigkeit von der erfassten modifizierten Strahlung ein Prüfspektrum zu erzeugen, und wobei die Auswerteeinrichtung dazu ausgebildet ist, das Prüfspektrum mit einem der Prüfreferenz zugeordneten Erwartungsspektrum zu vergleichen und in Abhängigkeit von Abweichungen des Prüfspektrums von dem Erwartungsspektrum die Fehlerfreiheit oder einen Fehlerzustand des Spektrometers festzustellen.

Das erfindungsgemäße Spektrometer weist also gegenüber herkömmlichen Spektrometern eine Modulationseinrichtung zur Ausführung des beschriebenen Prüfschritts des Modifizierens der Strahlung auf. Zudem sind die Erfassungseinrichtung und die Auswerteeinrichtung des erfindungsgemäßen Spektrometers entsprechend angepasst, so dass sie geeignet sind, anhand des aus der erfassten modifizierten Strahlung erzeugten Prüfspektrums Information über die Fehlerfreiheit oder einen Fehlerzustand des Spektrometers zu liefern.

Vorzugsweise umfasst die Modulationseinrichtung zumindest einen optischen Intensitätsmodulator, insbesondere ein LCD-Array, ein DLP-Array, eine Pockels-Zelle und/oder einen akusto-optischen Modulator oder Deflektor, der innerhalb des Strahlengangs der Strahlung zwischen der Sendeeinrichtung und der Erfassungseinrichtung, insbesondere außerhalb des Probenaufnahmebereichs, angeordnet ist.

Ferner ist es vorteilhaft, wenn die Sendeeinrichtung einen Laser umfasst und die Modulationseinrichtung alternativ oder zusätzlich zu einem optischen Intensitätsmodulator dazu ausgebildet ist, einen Betriebsstrom des Lasers zu modulieren.

Die Erfindung wird nachfolgend lediglich beispielhaft unter Bezugnahme auf die Figuren weiter erläutert.
- Fig. 1: zeigt ein Spektrometer zur Ausführung des Verfahrens gemäß einer ersten Ausführungsform in schematischer Darstellung.
- Fig. 2: zeigt ein Spektrometer zur Ausführung des Verfahrens gemäß einer zweiten Ausführungsform in schematischer Darstellung.
- Fig. 3: zeigt ein Spektrometer zur Ausführung des Verfahrens gemäß einer dritten Ausführungsform in schematischer Darstellung.
- Fig. 4a bis 4d: zeigen den zeitlichen Verlauf verschiedener Parameter der ausgesandten bzw. empfangenen Strahlung bei einer beispielshaften Durchführung des Verfahrens mit einem Spektrometer gemäß einer weiteren Ausführungsform.

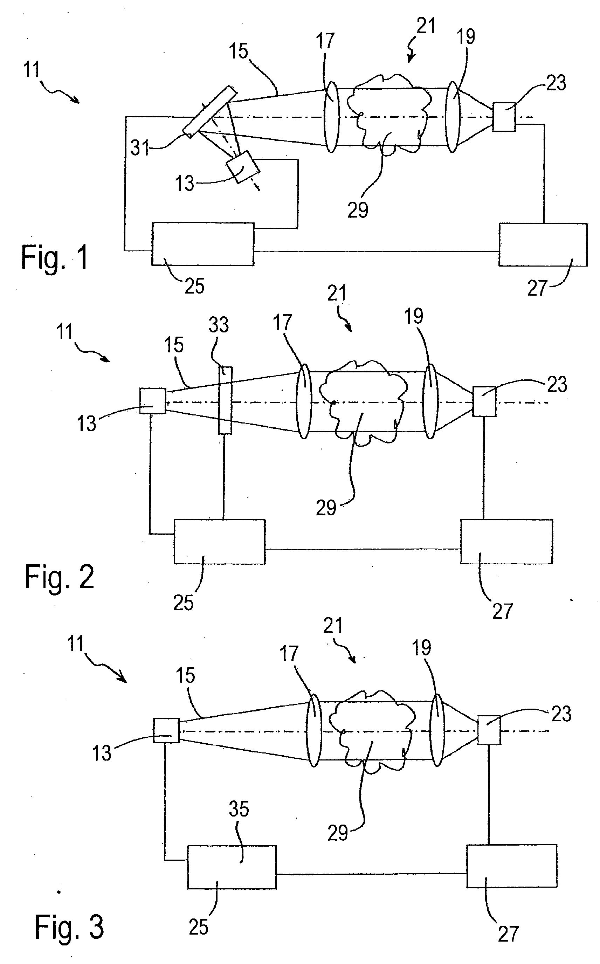

In den Fig. 1 bis 3 sind verschiedene Spektrometer 11 (einander entsprechende Elemente werden in den verschiedenen Figuren mit jeweils demselben Bezugszeichen gekennzeichnet) zur Ausführung eines jeweiligen Verfahrens gemäß verschiedenen Ausführungsform der Erfindung abgebildet. Das Spektrometer 11 der gezeigten Ausführungsform umfasst jeweils eine Sendeeinrichtung 13 in Form eines Lasers, die Strahlung 15 entlang eines Strahlengangs (strichpunktierte Linie) aussendet, zumindest zwei Linsen 17, 19, welche innerhalb des Strahlengangs einen Probenaufnahmebereich 21 begrenzen, sowie eine Erfassungseinrichtung 23 am Ende des Strahlengangs, welche die auf sie auftreffende Strahlung 15 erfasst und in ein Signalspektrum umwandelt.

Das Spektrometer 11 umfasst ferner jeweils eine Steuereinrichtung 25, mittels welcher die Sendeeinrichtung 13 zum Aussenden der Strahlung 15 angesteuert werden kann, sowie eine Auswerteeinrichtung 27, welche von der Erfassungseinrichtung 23 das Signalspektrum erhält, um es auszuwerten. Als Teil der Erfassungseinrichtung 23 oder zwischen der Erfassungseinrichtung 23 und der Auswerteeinrichtung 27 können nicht dargestellte Verstärker vorgesehen sein, um das Signalspektrum zu verstärken.

Über die Steuereinrichtung 25 kann die Wellenlänge und vorzugsweise auch die Intensität der ausgesandten Strahlung 15 zeitlich variabel eingestellt werden. Bei einer Messung wird die Sendeeinrichtung 13 dabei von der Steuereinrichtung 25 derart angesteuert, dass die Wellenlänge der ausgesandten Strahlung 15 einen für die Messung relevanten Wellenlängenbereich zeitlich linear durchläuft.

Des Weiteren kann eine in den Figuren als Linie dargestellte funktionelle Verbindung zwischen der Steuereinrichtung 25 und der Auswerteeinrichtung 27 bestehen. Diese dient insbesondere dazu, Information über den von der Steuereinrichtung 25 vorgegebenen Wellenlängenverlauf oder zumindest dessen Takt an die Auswerteeinrichtung 27 zu übermitteln, damit dem zeitlichen Verlauf der von der Erfassungseinrichtung 23 erfassten Strahlung 15 die jeweilige Wellenlänge zugeordnet werden kann. Ohne diese Information liegt das erzeugte Signalspektrum zunächst als zeitabhängiger Verlauf der empfangenen Strahlungsintensität vor; mithilfe der Information über den zeitlichen Wellenlängenverlauf, die es ermöglicht, jedem Zeitpunkt eine Wellenlänge zuzuordnen, kann das Signalspektrum dann als ein wellenlängenabhängiger Verlauf der empfangenen Strahlungsintensität aufgefasst werden.

Optional kann über die funktionelle Verbindung zwischen der Steuereinrichtung 25 und der Auswerteeinrichtung 27 auch die Steuereinrichtung 25 in Abhängigkeit von Auswerteergebnissen der Auswerteeinrichtung 27 beeinflusst werden. Auf diese Weise ist es denkbar, einen Regelkreis zu realisieren, der etwa bei einer automatisierten Kalibration nützlich sein kann.

Die von der Sendeeinrichtung 13 ausgesandte Strahlung 15 divergiert zunächst und wird dann von der ersten Linse 17 derart gebrochen, dass sie den Probenaufnahmebereich 21 als paralleles Strahlenbündel durchläuft. Mittels der zweiten Linse 19 wird die parallele Strahlung 15 dann im Wesentlichen auf die Erfassungseinrichtung 23 fokussiert, wo die Strahlung 15 und insbesondere deren Intensität dann detektiert werden kann. Auf diese Weise kann auch eine Erfassungseinrichtung 23 mit lediglich kleiner Detektionsfläche einen Probenaufnahmebereich 21 mit vergleichsweise großem Querschnitt abdecken.

In den Fig. 1 bis 3 ist jeweils eine in dem Probenaufnahmebereich 21 aufgenommene Probe 29 in Form eines unregelmäßig konturierten Messobjekts dargestellt. Diese Darstellung ist rein exemplarisch und kann sowohl einen Festkörper, eine Flüssigkeit als auch eine gasförmige Probe repräsentieren. Die Probe kann dabei ferner in einem Probenhalter, beispielsweise einer Messküvette, gehalten werden, der nicht dargestellt ist.

Für die Durchführung einer regulären Messung ist es erforderlich, dass sich eine zu messende Probe 29 in dem Spektrometer 11 befindet, um von diesem gemessen zu werden. Bei der Durchführung des Prüfverfahrens dagegen muss nicht zwangsläufig eine Probe 29 in dem Probenaufnahmebereich 21 aufgenommen sein. Vielmehr ist es gerade ein Vorteil des Prüfverfahrens, dass es ohne Probe 29, insbesondere ohne in das Spektrometer 11 aufgenommene Referenzmesszellen durchgeführt werden kann. Allerdings kann sich auch bei Durchführung des Prüfverfahrens eine zu messende Probe 29 in dem Probenaufnahmebereich 21 befinden. Das von dieser Probe 29 hervorgerufene und mittels der Erfassungseinrichtung 23 erzeugte Signalspektrum wird in diesem Fall aufgrund der Durchführung der Prüfschritte, insbesondere des Prüfschritts des Modifizierens der Strahlung 15 gemäß einer Prüfreferenz, überlagert.

Die in den Fig. 1 bis 3 dargestellten Ausführungsformen unterscheiden sich im Wesentlichen in der erfindungsgemäß vorgesehenen Modulationseinrichtung 31, 33, 35 zum Modifizieren der Strahlung 15 in ihrer Intensität.

In Fig. 1 ist die Modulationseinrichtung als reflektiver Modulator 31 ausgebildet. Dieser reflektive Modulator 31 lenkt die von der Sendeeinrichtung 13 ausgesandte Strahlung 15 in Richtung des Probenaufnahmebereichs 21 und weiter zur Erfassungseinrichtung 23 um (wobei weitere Umlenkungen des Strahlengangs nicht ausgeschlossen sind). Dabei wird jedoch nicht stets die gesamte Strahlung 15 reflektiert, sondern lediglich ein Anteil der Strahlung 15, der durch die jeweilig aktuelle Reflektivität des Modulators 31 bestimmt wird und kleiner oder gleich 100% beträgt. Die Reflektivität des Modulators 31 kann dabei durch die Steuereinrichtung 25 gesteuert werden und insbesondere synchronisiert mit dem Wellenlängenverlauf der ausgesandten Strahlung 15 einem zeitabhängigen Verlauf folgen. Da nur Strahlung 15, die von dem reflektiven Modulator 31 reflektiert wird, die Erfassungseinrichtung 23 erreicht, wird auf diese Weise durch den reflektiven Modulator 31 die Strahlung 15 in ihrer von der Erfassungseinrichtung 23 erfassten Intensität modifiziert.

Die Modulationseinrichtung 33 der Ausführungsform gemäß Fig. 2 ist der Modulationseinrichtung 31 der Fig. 1 sehr ähnlich mit dem Unterschied, dass es sich nicht um einen reflektiven, sondern um einen transmissiven Modulator 33 handelt. Der Anteil der von der Sendeeinrichtung 13 ausgesandten Strahlung 15, der zu dem Probenaufnahmebereich 21 und weiter zu der Erfassungseinrichtung 23 durchgelassen wird, wird daher durch die Transmissivität des Modulators 33 bestimmt, die kleiner oder gleich 100% beträgt. Auch der transmissive Modulator 33 wird von einer Steuereinrichtung 25 angesteuert und kann auf diese Weise die Intensität der ausgesandten Strahlung 15 auf durch die Steuereinrichtung 25 vorgegebene Weise in ihrer Intensität modifizieren.

Je nach Bauform des Spektrometers 11 oder einschränkenden Vorgaben hinsichtlich des Bauraums für das Spektrometer 11 kann eine Ausführung des Spektrometers 11 mit reflektivem oder mit transmissivem Modulator 31, 33 besser geeignet sein, da aufgrund des Umlenkens bzw. Durchlassens des Strahlengangs unterschiedliche Strahlengangverläufe realisiert werden können. Der reflektive oder transmissive Modulator muss nicht zwangsläufig zwischen der Sendeeinrichtung 13 und dem Probenaufnahmebereich 21 angeordnet sein, sondern kann auch an anderer Stelle im Strahlengang angeordnet sein. Vorzugsweise ist er außerhalb des Probenaufnahmebereichs 21 angeordnet.

Fig. 3 zeigt ein Spektrometer 11, bei dem die Modulationseinrichtung 35 die Strahlung 15 nicht erst moduliert, wenn sie von der Sendeeinrichtung 13 ausgesandt wurde, sondern bei dem die Modulation der Strahlung 15 schon bei deren Erzeugung erfolgt. Dazu beeinflusst die Modulationseinrichtung 35 den Betriebsstrom des bei dieser Ausführungsform als Sendeeinrichtung 31 fungierenden Lasers. Auf diese Weise kann die Intensität der ausgesandten Strahlung 15 zeitabhängig modifiziert werden. Bei dem in Fig. 3 dargestellten Spektrometer 11 bildet die Modulationseinrichtung 35 mit der Steuereinrichtung 25 eine Einheit. Es ist aber auch möglich, dass die Modulationseinrichtung 35 und die Steuereinrichtung 25 separat voneinander ausgebildet sind.

Bei den Spektrometern 11 gemäß den Fig. 1 bis 3 ist jeweils lediglich eine Modulationseinrichtung 31, 33, 35 dargestellt. Ein Spektrometer 11 kann aber grundsätzlich auch mehrere Modulationseinrichtungen 31, 33, 35 aufweisen. Beispielsweise können zwei oder drei der in diesen Ausführungsformen vorhandenen Modulationseinrichtungen 31, 33, 35 miteinander kombiniert werden.

Die Steuereinrichtung 25 ist mit der jeweiligen Modulationseinrichtung 31, 33, 35 verbunden, damit über die Steuereinrichtung 25 eingestellt werden kann, gemäß welchem zeitlichen Verlauf die Modulationseinrichtung 31, 33, 35 die Strahlung 15 modifizieren soll. Auf diese Weise kann der Modulationseinrichtung 31, 33, 35 mittels der Steuereinrichtung 25 eine jeweilige Prüfreferenz vorgegeben werden. Insbesondere können in der Steuereinrichtung 25 verschiedene Prüfreferenzen gespeichert sein oder gespeichert werden, aus denen dann eine jeweilige ausgewählt werden kann, gemäß der die Modulationseinrichtung 31, 33, 35 die Strahlung 15 dann modifiziert. Im Rahmen der Verstellbarkeit der Modulationseinrichtung 31, 33, 35, beispielsweise des möglichen Reflektivitäts- oder Transmissivitätsbereichs, kann die Modulationseinrichtung 31, 33, 35 mittels der Steuereinrichtung 25 vorzugsweise auch zu beliebigen zeitlichen Verläufen des Modifizierens der Strahlung 15 angesteuert werden, so dass eine nahezu unbeschränkte Vielzahl von Prüfreferenzen realisiert werden können.

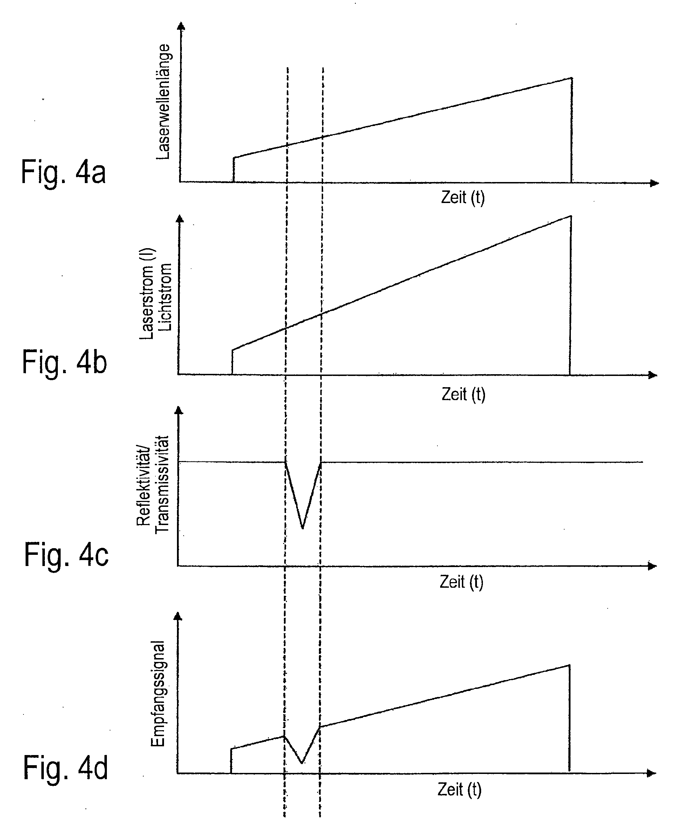

Die Fig. 4a bis 4d illustrieren beispielhaft, wie die Strahlung 15 durch die jeweilige Modulationseinrichtung 31, 33, 35 des Spektrometers 11 modifiziert werden kann. In Fig. 4a ist die Wellenlänge der von der Sendeeinrichtung 13 ausgesandten Strahlung 15 gegen die Zeit aufgetragen. Da es sich bei der Sendeeinrichtung 13 der geschilderten Ausführungsform um einen Laser handelt, ist die Ordinate als Laserwellenlänge gekennzeichnet. Wie in Fig. 4a zu erkennen ist, durchläuft die Laserwellenlänge ausgehend von einem Startzeitpunkt einen Wellenlängenbereich gemäß einer linear ansteigenden Rampe. Über diese Rampe kann jedem Zeitpunkt der Messung eindeutig eine Wellenlänge der Strahlung 15 zugeordnet werden. Auf diese Weise lassen sich alle zeitlichen Verläufe, wie etwa die in Fig. 4b bis 4d gezeigten, auch als wellenlängenabhängige Verläufe interpretieren.

Die von dem Laser 13 ausgesandte Strahlung 15 wird gemäß der Ausführungsform der Fig. 4a bis 4d auf zwei Weisen in ihrer Intensität modifiziert. Zum einen wird mittels einer Modulationseinrichtung 35 der Laserstrom, d.h. der Betriebsstrom des Lasers 13, derart beeinflusst, dass er synchron zum Durchlaufen der Wellenlängenrampe (Fig. 4a) linear zunimmt, wie in Fig. 4b gezeigt ist. Die Veränderung des Laserstroms entspricht dabei direkt einer Veränderung des Lichtstroms, also der Intensität der von dem Laser 13 ausgesandten Strahlung 15. Somit wird durch die Modulationseinrichtung 35 die Intensität der Strahlung 15 bereits bei ihrer Erzeugung gemäß dem in Fig. 4b gezeigten zeitlichen Verlauf modifiziert.

Die ausgesandte Strahlung 15 wird im dargestellten Fall allerdings zusätzlich noch weiter modifiziert. Hierzu umfasst die Modulationseinrichtung einen reflektiven oder transmissiven Modulator 31, 33, dessen Reflektivität bzw. Transmissivität gemäß dem in Fig. 4c gezeigten zeitlichen Verlauf moduliert wird. Dabei entspricht das Maximum der Reflektivität bzw. Transmissivität gerade 100%. Solange dieser Wert vorliegt, erreicht im Wesentlichen die gesamte ausgesandte Strahlung 15 die Erfassungseinrichtung 23. Gemäß dem in Fig. 4c gezeigten zeitlichen Verlauf, bricht die Reflektivität bzw. Transmissivität während eines bestimmten Zeitraums, der zeitlich auf die Wellenlängenrampe gemäß Fig. 4a abgestimmt ist und zur Verdeutlichung in den Fig. 4a bis 4d durch gestrichelte Linien begrenzt wird, vorübergehend mit V-förmigem Verlauf ein. Der dargestellte einfache Verlauf ist rein exemplarisch; für reale Anwendungen weist die Reflektivität bzw. Transmissivität in der Regel wesentlich komplexere Verläufe auf, die beispielsweise Absorptionslinien realer Proben oder Signalabschwächungen simulieren können.

In Fig. 4d ist das Empfangssignal, also die von der Erfassungseinrichtung 23 erfasste Intensität der Strahlung 15, gegen die Zeit aufgetragen. Der erfasste Intensitätsverlauf resultiert dabei aus dem Modifizieren der Strahlung 15 einerseits aufgrund des zeitlich variabel eingestellten Laserstroms gemäß Fig. 4b und andererseits aufgrund der zeitlich variabel eingestellten Reflektivität bzw. Transmissivität gemäß Fig. 4c. Somit wird der gesamte erfasste Intensitätsverlauf gemäß Fig. 4d durch die Modulationseinrichtung 31, 33, 35 vorgegeben. Über den bekannten zeitlichen Verlauf der Wellenlänge der ausgesandten Strahlung 15 gemäß Fig. 4a lässt sich das Empfangssignal auch gegenüber der Wellenlänge auftragen, um das Prüfspektrum zur Prüfreferenz, gemäß welcher die Modulationseinrichtung 31, 33, 35 die Strahlung 15 moduliert hat, zu erhalten. Dabei bleibt der Verlauf wegen der Linearität der Wellenlängenrampe im Wesentlichen unverändert.

Im Falle der Fehlerfreiheit des Spektrometers 11 entspricht somit das erhaltene Prüfspektrum gemäß Fig. 4d dem Erwartungsspektrum, das als direkte Folge des Modifizierens der Strahlung 15 ohne sonstige Beeinflussungen der Strahlungsintensität zu erwarten ist. Die ist in Fig. 4d der Fall. Liegt dagegen ein Fehlerzustand der Spektrometers 11 vor, in dem der Betrieb des Spektrometers 11 nicht fehlerfrei ist, sondern sich dieser Fehlerzustand auf die Intensität der Strahlung 15 auswirkt, weicht das Prüfspektrum von dem Erwartungsspektrum ab. Diese Abweichung kann dann mittels der Auswerteeinrichtung 27 ermittelt werden, so dass der Fehlerzustand festgestellt werden kann.

Die Abweichungen können dabei an verschiedenen Stellen des Messpfads von der Erzeugung der Strahlung 15 über ihre Erfassung bis hin zur elektronischen Verarbeitung des erfassten Signals und dessen gegebenenfalls software-basierten Auswertung durch Fehlerzustände des Spektrometers 11 verursacht werden. Daher kann mittels des Prüfverfahrens der gesamte Messpfad auf seine Fehlerfreiheit hin überprüft werden. Zudem ist das Verfahren besonders flexibel, da die jeweiligen Prüfreferenzen, gemäß denen die Strahlung 15 durch die Modulationseinrichtung 31, 33, 35 modifiziert wird, wahlweise eingestellt werden können. So kann das Spektrometer 11 auch z.B. hinsichtlich der Linearität bezüglich der Gaskonzentration, der Kompensation von langsamen Intensitätsschwankungen oder des Verhaltens bezüglich schneller zufälliger Signalfluktuationen getestet werden.

### Bezugszeichenliste

- 11: Spektrometer
- 13: Sendeeinrichtung
- 15: Strahlung
- 17: Linse
- 19: Linse
- 21: Probenaufnahmebereich
- 23: Erfassungseinrichtung
- 25: Steuereinrichtung
- 27: Auswerteeinrichtung
- 29: Probe
- 31: reflektiver Modulator
- 33: transmissiver Modulator
- 35: Modulationseinrichtung zur Modifizierung des Laser-Betriebsstromes

## Patentansprüche

1. Prüfverfahren zur Funktionsprüfung eines Spektrometers (11) mit
- einer Sendeeinrichtung (13) zur Erzeugung und Aussendung von Strahlung (15) gemäß einem vorgegebenen Wellenlängenverlauf,
- einem Probenaufnahmebereich (21), durch den die ausgesandte Strahlung (15) geleitet wird,
- einer Erfassungseinrichtung (23) zur Erfassung der durch den Probenaufnahmebereich (21) geleiteten Strahlung (15) und zur Erzeugung eines Signalspektrums in Abhängigkeit von der erfassten Strahlung (15) und
- einer Auswerteeinrichtung (27) zur Auswertung des Signalspektrums,
wobei das Prüfverfahren folgende Prüfschritte umfasst:
- Modifizieren der Strahlung (15) gemäß wenigstens einer vorgegebenen Prüfreferenz,
- Erzeugen eines Prüfspektrums in Abhängigkeit von der erfassten modifizierten Strahlung (15),
- Vergleichen des Prüfspektrums mit einem der Prüfreferenz zugeordneten Erwartungsspektrum und
- Feststellen der Fehlerfreiheit oder eines Fehlerzustandes des Spektrometers (11) in Abhängigkeit von Abweichungen des Prüfspektrums von dem Erwartungsspektrum,
**dadurch gekennzeichnet, dass**
der Prüfschritt des Modifizierens das Modulieren der Strahlung (15) in ihrer Intensität mittels einer Modulationseinrichtung (31, 33, 35) des Spektrometers (11) umfasst,
wobei die Modulationseinrichtung (31, 33, 35) zum Modifizieren der Intensität der Strahlung (15) angesteuert wird und wobei
das Modulieren der Strahlung (15) gemäß einem zeitlichen Verlauf erfolgt, der auf den Wellenlängenverlauf der ausgesandten Strahlung (15) abgestimmt ist.

2. Verfahren nach Anspruch 1,
**dadurch gekennzeichnet, dass**
dass das Prüfverfahren einem normalen Spektrometerbetrieb überlagert ist.

3. Verfahren nach Anspruch 1 oder 2,
**dadurch gekennzeichnet, dass**
das Prüfverfahren ohne Probe (29) im Probenaufnahmebereich (21) durchgeführt wird.

4. Verfahren nach zumindest einem der vorstehenden Ansprüche,
**dadurch gekennzeichnet, dass**
die Strahlung (15) während des Prüfschritts des Modifizierens außerhalb des Probenaufnahmebereichs (21) moduliert wird.

5. Verfahren nach zumindest einem der vorstehenden Ansprüche,
**dadurch gekennzeichnet, dass**
durch den Prüfschritt des Modifizierens der Strahlung (15) mittels der Modulationseinrichtung (31, 33, 35) simuliert wird, dass von der Sendeeinrichtung (13) ausgesandte Strahlung (15) von einer in den Probenaufnahmebereich (21) aufgenommenen Probe (29) und/oder aufgrund von Druckänderungen, von Konzentrationsänderungen, des Einflusses von Fremdgasen und/oder von optischen Störungen, insbesondere Staubund/oder Schlierenfluktuationen, modifiziert wird.

6. Verfahren nach zumindest einem der vorstehenden Ansprüche,
**dadurch gekennzeichnet, dass**
die vorgegebene Prüfreferenz, gemäß welcher die Strahlung (15) mittels der Modulationseinrichtung (31, 33, 35) moduliert wird, vor dem Schritt des Modifizierens mittels einer Steuereinrichtung (25) des Spektrometers (11) aus mehreren verschiedenen Prüfreferenzen ausgewählt und/oder frei eingestellt werden kann.

7. Verfahren nach zumindest einem der vorstehenden Ansprüche,
**dadurch gekennzeichnet, dass**
die Modulationseinrichtung einen transmissiven Modulator (33) umfasst, gemäß dessen jeweiliger Transmissivität die ausgesandte Strahlung (15) zur Erfassungseinrichtung (23) durchgelassen wird.

8. Verfahren nach zumindest einem der vorstehenden Ansprüche,
**dadurch gekennzeichnet, dass**
die Modulationseinrichtung einen reflektiven Modulator (31) umfasst, gemäß dessen jeweiliger Reflektivität die ausgesandte Strahlung (15) zur Erfassungseinrichtung (23) reflektiert wird.

9. Verfahren nach zumindest einem der vorstehenden Ansprüche,
**dadurch gekennzeichnet, dass**
die Modulationseinrichtung (31, 33) zumindest einen optischen Intensitätsmodulator umfasst, insbesondere ein LCD-Array, ein DLP-Array, eine Pockels-Zelle und/oder einen akusto-optischen Modulator oder Deflektor.

10. Verfahren nach zumindest einem der vorstehenden Ansprüche,
**dadurch gekennzeichnet, dass**
der Prüfschritt des Modifizierens umfasst, dass die Modulationseinrichtung (35) die Sendeeinrichtung (13) dazu ansteuert, Strahlung (15) gemäß einem zeitlichen Intensitätsverlauf auszusenden.

11. Verfahren nach Anspruch 10,
**dadurch gekennzeichnet, dass**
die Sendeeinrichtung (13) einen Laser umfasst und dass der Prüfschritt des Modifizierens umfasst, dass die Modulationseinrichtung (35) einen Betriebsstrom des Lasers (13) moduliert.

12. Verfahren zum Betrieb eines Spektrometers (11), das folgende Betriebsschritte umfasst:
- Erzeugen und Aussenden von Strahlung (15) gemäß einem vorgegebenen Wellenlängenverlauf mittels einer Sendeeinrichtung (13) des Spektrometers (11),
- Leiten der ausgesandten Strahlung (15) durch einen Probenaufnahmebereich (21) des Spektrometers (11),
- Erfassen der durch den Probenaufnahmebereich (21) gelenkten Strahlung (15) mittels einer Erfassungseinrichtung (23) des Spektrometers (11),
- Erzeugen eines Signalspektrums in Abhängigkeit von der erfassten Strahlung (15) und
- Auswerten des Signalspektrum mittels einer Auswerteeinrichtung (27) des Spektrometers (11),
**dadurch gekennzeichnet, dass**
diesen Betriebsschritten ein Prüfverfahren gemäß zumindest einem der vorstehenden Ansprüche überlagert wird.

13. Spektrometer zur Ausführung des Verfahrens gemäß zumindest einem der vorstehenden Ansprüche, mit
- einer Sendeeinrichtung (13) zur Erzeugung und Aussendung von Strahlung (15) gemäß einem vorgegebenen Wellenlängenverlauf,
- einem Probenaufnahmebereich (21), durch den die ausgesandte Strahlung (15) geleitet wird,
- einer Erfassungseinrichtung (23) zur Erfassung der durch den Probenaufnahmebereich (21) geleiteten Strahlung (15) und zur Erzeugung eines Signalspektrums in Abhängigkeit von der erfassten Strahlung (15),
- einer Auswerteeinrichtung (27) zur Auswertung des Signalspektrums sowie
- einer Modulationseinrichtung (31, 33, 35) zur Intensitätsmodulation der Strahlung (15) gemäß wenigstens einer Prüfreferenz,
wobei die Erfassungseinrichtung (23) dazu ausgebildet ist, die durch die Modulationseinrichtung modifizierte Strahlung (15) zu erfassen und in Abhängigkeit von der erfassten modifizierten Strahlung (15) ein Prüfspektrum zu erzeugen, und
wobei die Auswerteeinrichtung (27) dazu ausgebildet ist, das Prüfspektrum mit einem der Prüfreferenz zugeordneten Erwartungsspektrum zu vergleichen und in Abhängigkeit von Abweichungen des Prüfspektrums von dem Erwartungsspektrum die Fehlerfreiheit oder einen Fehlerzustand des Spektrometers (11) festzustellen,
**dadurch gekennzeichnet, dass**
die Modulationseinrichtung (31, 33, 35) dazu ausgebildet ist, zum Modifizieren der Intensität der Strahlung (15) angesteuert zu werden und die Strahlung (15) gemäß einem zeitlichen Verlauf zu modulieren, der auf den Wellenlängenverlauf der ausgesandten Strahlung (15) abgestimmt ist.

14. Spektrometer nach Anspruch 13,
**dadurch gekennzeichnet, dass**
die Modulationseinrichtung (31, 33) zumindest einen optischen Intensitätsmodulator umfasst, insbesondere ein LCD-Array, ein DLP-Array, eine Pockels-Zelle und/oder einen akusto-optischen Modulator oder Deflektor, der innerhalb des Strahlengangs der Strahlung (15) zwischen der Sendeeinrichtung (13) und der Erfassungseinrichtung (23), insbesondere außerhalb des Probenaufnahmebereichs (21), angeordnet ist.

15. Spektrometer nach Anspruch 13 oder 14,
**dadurch gekennzeichnet, dass**
die Sendeeinrichtung (13) einen Laser umfasst und dass die Modulationseinrichtung (35) dazu ausgebildet ist, einen Betriebsstrom des Lasers (13) zu modulieren.

## Claims

1. A test method for a functional test of a spectrometer (11) comprising
- a transmission device (13) for generating and transmitting radiation (15) in accordance with a predefined wavelength extent;
- a sample reception region (21) through which the transmitted radiation (15) is conducted;
- a detection device (23) for detecting the radiation (15) conducted through the sample reception region (21) and for generating a signal spectrum in dependence on the detected radiation (15); and
- an evaluation device (27) for evaluating the signal spectrum,
wherein the test method comprises the following test steps:
- modifying the radiation (15) in accordance with at least one predefined test reference;
- generating a test spectrum in dependence on the detected modified radiation (15):
- comparing the test spectrum with an expectancy spectrum associated with the test reference; and
- determining the freedom from defects or a defect state of the spectrometer (11) in dependence on deviations of the test spectrum from the expectancy spectrum,
**characterized in that**
the test step of modification comprises the modulation of the intensity of the radiation (15) by means of a modulation device (31, 33, 35) of the spectrometer (11),
with the modulation device (31, 33, 35) being controlled for modifying the intensity of the radiation (15); and with
the modulation of the radiation (15) taking place in accordance with a time development which is matched to the wavelength extent of the transmitted radiation (15).

2. A method in accordance with claim 1,
**characterized in that**
the test method is superposed on a normal spectrometer operation.

3. A method in accordance with claim 1 or claim 2,
**characterized in that**
the test method is carried out without a sample (29) in the sample reception region (21).

4. A method in accordance with at least one of the preceding claims,
**characterized in that**
the radiation (15) is modulated during the test step of modification outside the sample reception region (21).

5. A method in accordance with at least one of the preceding claims,
**characterized in that**
a simulation is carried out by the test step of modification of the radiation (15) by means of the modulation device (31, 33, 35) **in that** radiation (15) transmitted by the transmission device (13) is modified by a sample (29) received in the sample reception region (21) and/or due to pressure changes, due to concentration changes, the influence of external gases and/or due to optical disturbances, in particular dust fluctuation and/or streak fluctuations.

6. A method in accordance with at least one of the preceding claims,
**characterized in that**
the predefined test reference in accordance with which the radiation (15) is modulated by means of the modulation device (31, 33, 35) can be selected from a plurality of different test references and/or can be freely set before the step of modification by means of a control device (25) of the spectrometer (11).

7. A method in accordance with at least one of the preceding claims,
**characterized in that**
the modulation device comprises a transmissive modulator (30) in accordance with whose respective transmittivity the transmitted radiation (15) is transmitted to the detection device (23).

8. A method in accordance with at least one of the preceding claims,
**characterized in that**
the modulation device comprises a reflective modulator (31) in accordance with whose respective reflectivity the transmitted radiation (15) is reflected to the detection device (23).

9. A method in accordance with at least one of the preceding claims,
**characterized in that**
the modulation device (31, 33) comprises at least one optical intensity modulator, in particular an LCD array, a DLP array, a Pockels cell and/or an acousto-optical modulator or deflector.

10. A method in accordance with at least one of the preceding claims,
**characterized in that**
the test step of modification comprises the modulation device (35) controlling the transmission device (13) to transmit radiation (15) in accordance with a temporal intensity development.

11. A method in accordance with claim 10,
**characterized in that**
the transmission device (13) comprises a laser; and **in that** the test step of modification comprises the modulation device (35) modulating an operating current of the laser (13).

12. A method of operating a spectrometer (11) comprising the following operating steps:
- generating and transmitting radiation (15) in accordance with a predefined wavelength extent by means of a transmission device (13) of the spectrometer (11);
- conducting the transmitted radiation (15) through a sample reception region (21) of the spectrometer (11);
- detecting the radiation (15) directed through the sample reception region (21) by means of a detection device (23) of the spectrometer (11);
- generating a signal spectrum in dependence on the detected radiation (15); and
- evaluating the signal spectrum by means of an evaluation device (27) of the spectrometer (11),
**characterized in that**
a test method in accordance with at least one of the preceding claims is superposed on these operating steps.

13. A spectrometer for carrying out the method in accordance with at least one of the preceding claims, comprising
- a transmission device (13) for generating and transmitting radiation (15) in accordance with a predefined wavelength extent;
- a sample reception region (21) through which the transmitted radiation (15) is conducted;
- a detection device (23) for detecting the radiation (15) conducted through the sample reception region (21) and for generating a signal spectrum in dependence on the detected radiation (15);
- an evaluation device (27) for evaluating the signal spectrum; and
- a modulation device (31, 33, 35) for the intensity modulation of the radiation (15) in accordance with at least one test reference,
wherein the detection device (23) is configured to detect the radiation (15) modified by the modulation device and to generate a test spectrum in dependence on the detected modified radiation (15); and
wherein the evaluation device (27) is configured to compare the test spectrum with an expectancy spectrum associated with the test reference and to determine the freedom from defects or a defect state of the spectrometer (11) in dependence on deviations of the test spectrum from the expectancy spectrum,
**characterized in that**
the modulation device (31, 33, 35) is configured to be controlled for modifying the intensity of the radiation (13) and to modulate the radiation (15) in accordance with a time development which is matched to the wavelength extent of the transmitted radiation (15).

14. A spectrometer in accordance with claim 13,
**characterized in that**
the modulation device (31, 33) comprises at least one optical intensity modulator, in particular an LCD array, a DLP array, a Pockels cell and/or an acousto-optical modulator or deflector which is arranged within the optical path of the radiation (15) between the transmission device (13) and the detection device (23), in particular outside the sample reception region (21).

15. A spectrometer in accordance with claim 13 or claim 14,
**characterized in that**
the transmission device (13) comprises a laser; and **in that** the modulation device (35) is configured to modulate an operating current of the laser (13).

## Revendications

1. Procédé de contrôle du fonctionnement d'un spectromètre (11) comprenant
- un dispositif émetteur (13) pour produire et émettre un rayonnement (15) selon une évolution prédéterminée des longueurs d'onde,
- une zone (21) de réception d'échantillon traversée par le rayonnement émis (15),
- un dispositif de détection (23) pour détecter le rayonnement (15) envoyé à travers la zone (21) de réception d'échantillon et pour produire un spectre de signaux en fonction du rayonnement détecté (15), et
- un dispositif d'évaluation (27) pour évaluer le spectre de signaux,
le procédé de contrôle comprenant les étapes de contrôle suivantes :
- on modifie le rayonnement (15) selon au moins une référence de contrôle prédéterminée,
- on produit un spectre de contrôle en fonction du rayonnement modifié détecté (15),
- on compare le spectre de contrôle à un spectre attendu associé à la référence de contrôle, et
- on constate l'absence d'erreur ou la présence un état d'erreur du spectromètre (11) en fonction des écarts du spectre de contrôle par rapport au spectre attendu,
**caractérisé en ce que**
l'étape de contrôle qu'est la modification comprend la modulation du rayonnement (15) dans son intensité au moyen d'un dispositif de modulation (31, 33, 35) du spectromètre (11),
le dispositif de modulation (31, 33, 35) étant piloté pour modifier l'intensité du rayonnement (15), et
la modulation du rayonnement (15) s'effectue selon une évolution temporelle qui est accordée à l'évolution des longueurs d'onde du rayonnement émis (15).

2. Procédé selon la revendication 1, **caractérisé en ce que** le procédé de contrôle est superposé à un fonctionnement normal du spectromètre.

3. Procédé selon la revendication 1 ou 2, **caractérisé en ce que** le procédé de contrôle s'effectue sans échantillon (29) dans la zone de réception d'échantillon (21).

4. Procédé selon l'une au moins des revendications précédentes, **caractérisé en ce que** le rayonnement (15) est modulé pendant l'étape de contrôle qu'est la modification à l'extérieur de la zone de réception d'échantillon (21).

5. Procédé selon l'une des revendications précédentes, **caractérisé en ce que** l'étape de contrôle qu'est la modification du rayonnement (15) au moyen du dispositif de modulation (31, 33, 35) permet de simuler qu'un rayonnement (15) émis par le dispositif émetteur (13) est modifié par un échantillon (29) reçu par la zone de réception d'échantillon (21) et/ou par des variations de pression, des variations de concentration, par l'influence de gaz étrangers et/ou par des perturbations optiques, en particulier des fluctuations dues à des poussières et/ou à des stries.

6. Procédé selon l'une au moins des revendications précédentes, **caractérisé en ce qu'**avant l'étape de modification, la référence de contrôle prédéterminée selon laquelle le rayonnement (15) est modulé au moyen du dispositif de modulation (31, 33, 35) peut être choisie et/ou réglée librement parmi plusieurs références de contrôle différentes au moyen d'un dispositif de commande (25) du spectromètre (11).

7. Procédé selon l'une des revendications précédentes, **caractérisé en ce que** le dispositif de modulation comprend un modulateur transmissif (33) selon la transmissivité respective duquel on laisse passer le rayonnement émis (15) vers le dispositif de détection (23).

8. Procédé selon l'une des revendications précédentes, **caractérisé en ce que** le dispositif de modulation comprend un modulateur réflectif (31) selon la réflectivité respective duquel on réfléchit le rayonnement émis (15) vers le dispositif de détection (23).

9. Procédé selon l'une des revendications précédentes, **caractérisé en ce que** le dispositif de modulation (31, 33) comprend au moins un modulateur d'intensité optique, en particulier un réseau LCD, un réseau DLP, une cellule de Pockels et/ou un modulateur ou déflecteur acousto-optique.

10. Procédé selon l'une des revendications précédentes, **caractérisé en ce que** l'étape de contrôle qu'est la modification inclut que le dispositif de modulation (35) pilote le dispositif émetteur (13) pour émettre le rayonnement (15) selon une évolution temporelle de l'intensité.

11. Procédé selon la revendication 10, **caractérisé en ce que** le dispositif émetteur (13) comprend un laser et **en ce que** l'étape de modification inclut que le dispositif de modulation (35) module un courant de fonctionnement du laser (13).

12. Procédé de fonctionnement d'un spectromètre (11) qui comprend les étapes de fonctionnement suivantes :
- on produit et on émet un rayonnement (15) selon une évolution prédéterminée des longueurs d'onde au moyen d'un dispositif émetteur (13) du spectromètre (11),
- on envoie le rayonnement émis (15) à travers une zone de réception d'échantillon (21) du spectromètre (11),
- on détecte le rayonnement (15) envoyé à travers la zone de réception d'échantillon (21) au moyen d'un dispositif de détection (23) du spectromètre (11),
- on produit un spectre de signaux en fonction du rayonnement (15) détecté, et
- on évalue le spectre de signaux au moyen d'un dispositif d'évaluation (27) du spectromètre (11),
**caractérisé en ce que**
on superpose à ces étapes de fonctionnement un procédé de contrôle selon l'une au moins des revendications précédentes.

13. Spectromètre pour mettre en oeuvre le procédé selon l'une des revendications précédentes, comportant
- un dispositif émetteur (13) pour produire et émettre un rayonnement (15) selon une évolution prédéterminée des longueurs d'ondes,
- une zone (21) de réception d'échantillon traversée par le rayonnement émis (15),
- un dispositif de détection (23) pour détecter le rayonnement (15) envoyé à travers la zone (21) de réception d'échantillon et pour produire un spectre de signaux en fonction du rayonnement détecté (15),
- un dispositif d'évaluation (27) pour évaluer le spectre de signaux, et
- un dispositif de modulation (31, 33, 35) pour moduler l'intensité du rayonnement (15) selon au moins une référence de contrôle,
le dispositif de détection (23) étant réalisé pour détecter le rayonnement (15) modifié par le dispositif de modulation et pour produire un spectre de contrôle en fonction du rayonnement modifié (15) détecté, et
le dispositif d'évaluation (27) étant réalisé pour comparer le spectre de contrôle à un spectre attendu associé à la référence de contrôle, et pour constater l'absence d'erreur ou la présence d'un état d'erreur du spectromètre (11) en fonction des écarts du spectre de contrôle par rapport au spectre attendu,
**caractérisé en ce que**
le dispositif de modulation (31, 33, 35) est réalisé pour être piloté en vue de modifier l'intensité du rayonnement (15) et de moduler le rayonnement (15) selon une évolution temporelle qui est accordée à l'évolution des longueurs d'onde du rayonnement (15) émis.

14. Spectromètre selon la revendication 13, **caractérisé en ce que** le dispositif de modulation (31, 33) comprend au moins un modulateur d'intensité optique, en particulier un réseau LCD, un réseau DLP, une cellule de Pockels et/ou un modulateur ou déflecteur acousto-optique, qui est agencé à l'intérieur du chemin optique du rayonnement (13) entre le dispositif émetteur (13) et le dispositif de détection (23), en particulier à l'extérieur de la zone de réception d'échantillon (21).

15. Spectromètre selon la revendication 13 ou 14, **caractérisé en ce que** le dispositif émetteur (13) comprend un laser et **en ce que** le dispositif de modulation (35) est réalisé pour moduler un courant de fonctionnement du laser (13).
